**Europäisches Patentamt**

**European Patent Office**

**Office européen des brevets**

(11) Numéro de publication : **0 149 935**
**B1**

(12) **FASCICULE DE BREVET EUROPÉEN**

(45) Date de publication du fascicule du brevet :
**19.08.87**

(21) Numéro de dépôt : **84402569.2**

(22) Date de dépôt : **12.12.84**

(51) Int. Cl.⁴ : **B 60 B 7/06**

(54) **Dispositif de fixation amovible d'un enjoliveur sur une roue de véhicule et assemblage obtenu à l'aide de ce dispositif.**

(30) Priorité : **20.01.84 FR 8400906**

(43) Date de publication de la demande :
**31.07.85 Bulletin 85/31**

(45) Mention de la délivrance du brevet :
**19.08.87 Bulletin 87/34**

(84) Etats contractants désignés :
**AT BE CH DE GB IT LI LU NL SE**

(56) Documents cités :
**AU-B-    38 852**
**FR-A- 2 157 793**
**GB-A- 2 034 257**
**GB-A- 2 106 458**
**US-A- 2 132 298**
**US-A- 2 812 215**
**US-A- 4 382 635**
**US-A- 4 470 638**

(73) Titulaire : **RAPID S.A.**
**251 Boulevard Péreire**
**F-75852 Paris Cedex 17 (FR)**

(72) Inventeur : **Dubost, Dominique Michel Louis**
**52 Résidence Elysée II**
**F-78170 La Celle Saint Cloud (FR)**

(74) Mandataire : **Durand, Yves Armand Louis et al**
**Cabinet Z. Weinstein 20, Avenue de Friedland**
**F-75008 Paris (FR)**

Jouve, 18, rue St-Denis, 75001 Paris, France

## Description

La présente invention a essentiellement pour objet un dispositif permettant la fixation amovible d'un enjoliveur sur une roue de véhicule.

Elle vise également l'assemblage formé par un enjoliveur et une roue de véhicule, et réalisé à l'aide de ce dispositif.

Il est connu depuis déjà longtemps de fixer des enjoliveurs sur les roues d'un véhicule au moyen d'une vis de fixation au centre de l'enjoliveur et de la roue.

Mais la technologie des roues de véhicule a beaucoup évolué, si bien que la forme des roues actuelles est plus ou moins complexe et d'un aspect qui n'est guère esthétique. Aussi, on tend actuellement à utiliser des enjoliveurs qui cachent complètement le voile de roue et qui nécessitent une fixation différente et plus sophistiquée que la fixation classique par vis.

A cet égard, on a déjà proposé, d'après le document GB-A-2 106 458, de fixer un enjoliveur sur une roue par l'intermédiaire d'un certain nombre d'attaches élastiques assurant ponctuellement la liaison entre l'enjoliveur et un redan annulaire du voile ou de la jante de la roue. C'est ainsi que les attaches de fixation pouvaient être accrochées dans un redan annulaire de la jante, et d'autre part dans une saillie en forme d'anneau prévue sur la face interne de l'enjoliveur.

Mais cette solution de fixation présente un certain nombre d'inconvénients.

Il faut tout d'abord noter que les attaches accrochées sur le voile ou la jante de roue agressent la peinture et provoquent évidemment à la longue des points de corrosion.

En outre, les enjoliveurs sont aujourd'hui réalisés généralement en matière plastique, de sorte que les attaches induisent des contraintes de flexion dans l'enjoliveur qui, toutes choses égales par ailleurs, peut se déformer avec le temps, sous l'effet par exemple du rayonnement solaire ou de la chaleur dégagée par les freins du véhicule.

Il en résulte que les contraintes sur l'enjoliveur peuvent à la longue se relâcher, tant et si bien que l'enjoliveur peut se détacher de la roue lors du roulement du véhicule.

Il convient encore d'ajouter ici que les formes de jante des roues actuelles sont telles que cela conduit, pour obtenir un effort d'arrachement suffisant, à augmenter le niveau de contrainte dans l'attache elle-même, ce qui se répercute évidemment dans l'enjoliveur qui est nécessairement, et comme on le comprend, sollicité par des contraintes très élevées et susceptibles, à la longue, de provoquer sa déformation et sa séparation de la roue. Pour remédier à cela, on pourrait bien sûr améliorer la rigidité de l'enjoliveur en prévoyant sur celui-ci des nervures ou analogues, mais l'enjoliveur devient alors très coûteux en raison notamment de la complexité du moule à réaliser pour le fabriquer.

On connaît par ailleurs, d'après le document AU-B-38852, un dispositif de fixation amovible d'un enjoliveur qui utilise une couronne en forme de manchon comportant des dents et emmanché sur la périphérie annulaire de l'enjoliveur pour retenir directement celui-ci sur la jante de la roue grâce aux dents qui sont ancrées sur la jante de roue suivant une certaine longueur et aussi dans un redan prévu sur cette jante.

Mais une telle solution ne permet pas de localiser la fixation de l'enjoliveur au seul niveau du redan de la jante, car les dents prévues sur le manchon ne le permettraient pas, et c'est pourquoi les dents sont prévues sur toute la longueur du manchon afin de pouvoir s'accrocher aussi sur la partie restante de la jante. Il en résulte que l'enjoliveur est certes fermement accroché à la jante de roue, mais, en revanche, ne peut pas être démonté facilement de cette jante, à moins d'exercer une force d'arrachement ou de traction élevée pour le désolidariser de la jante, ce qui risque de le casser ou de le déformer, de sorte qu'il doit être remplacé. En outre, l'entière périphérie annulaire de l'enjoliveur est retenue sur la jante par l'intermédiaire du manchon avec dents, de sorte que, lors du roulement du véhicule, les déformations de la roue se répercuteront sur l'enjoliveur qui sera nécessairement soumis à des contraintes de flexion et pourra se détériorer.

La présente invention a donc pour but de remédier à tous ces inconvénients et de résoudre le problème du clippage efficace d'un enjoliveur dans le seul redan d'une jante de roue, tout en supprimant le risque de contraintes de flexion et l'agression de la peinture de la jante de roue.

A cet effet, l'invention a pour objet un dispositif de fixation amovible d'un enjoliveur sur une jante de roue par l'intermédiaire d'une couronne indépendante et élastiquement déformable qui peut être ancrée sur la jante de roue, caractérisé en ce que ladite couronne comporte une âme reliée par un voile de matière à une lèvre annulaire externe mince et plus élastique que l'âme pour permettre le clippage de la couronne par emmanchement à force et encastrement de la lèvre dans un redan annulaire de la jante de roue, ladite âme formant avec la lèvre une rainure annulaire présentant sensiblement la forme d'un V, et étant reliée à l'enjoliveur par des attaches ou des doigts solidaires de l'âme et clippés dans des logements prévus sur la face interne de l'enjoliveur.

On comprend donc que la couronne indépendante possède une structure telle qu'elle peut être fixée par clippage sur seulement le redan de la jante de la roue sans risque d'agression pour la peinture de cette jante. En outre, cette couronne permet non seulement une bonne fixation de l'enjoliveur à la jante de roue sans que les attaches contactent ladite jante, mais elle évite de mettre de façon permanente l'enjoliveur sous contrainte, puisque, si, par impossible, il y a des contraintes au seul niveau du redan, celles-ci sont reprises par la couronne qui absorbera avantageusement les déformations possibles de la roue lors du roulement du véhicule.

Suivant un mode particulier de réalisation de cette invention, l'âme de la couronne comporte des pions de centrage de l'enjoliveur par rapport à la couronne, ces pions coopérant avec des logements de forme correspondante sur la face interne de l'enjoliveur.

Mais d'autres caractéristiques et avantages de l'invention apparaîtront mieux dans la description détaillée qui suit et se réfère aux dessins annexés donnés uniquement à titre d'exemples, et dans lesquels :

La figure 1 est une vue en coupe axiale, avec arrachements, d'une roue de véhicule sur laquelle est monté un enjoliveur à l'aide du dispositif conforme à l'invention.

La figure 2 est une vue en plan de la couronne élastiquement déformable.

La figure 3 est une vue en coupe montrant à plus grande échelle les moyens de fixation de l'enjoliveur sur la roue.

La figure 4 est une vue en coupe faite au niveau d'un pion de centrage de l'enjoliveur par rapport à la couronne, et

La figure 5 est une vue en coupe d'un autre mode de réalisation d'attache de fixation de l'enjoliveur sur la roue.

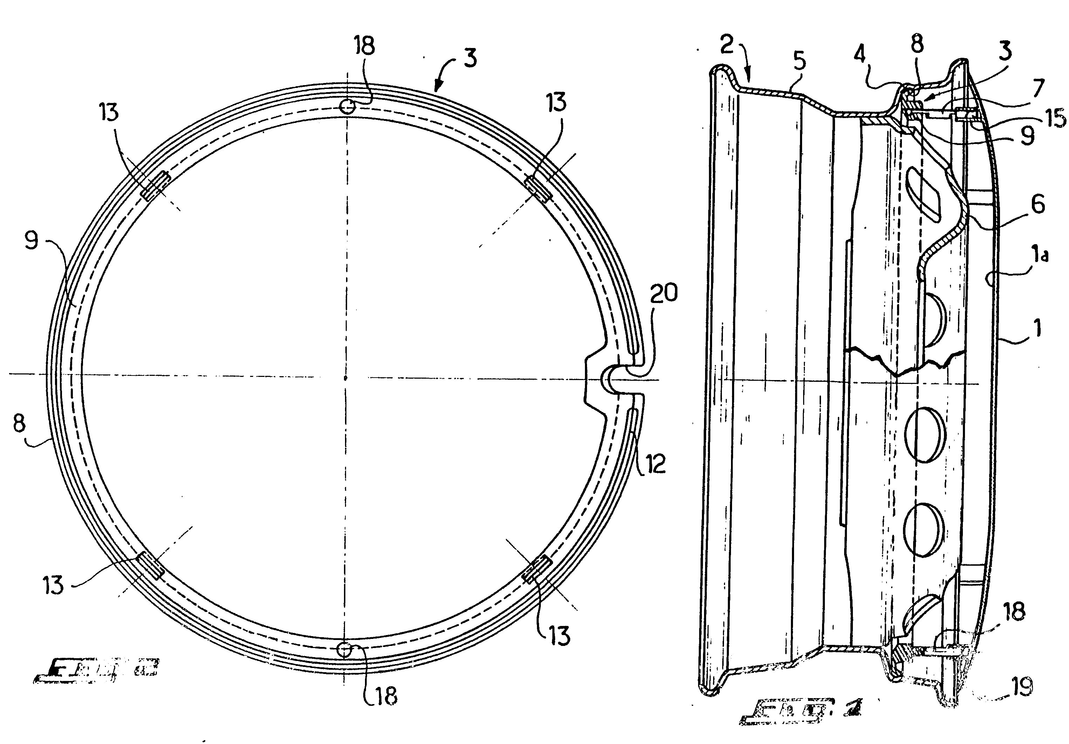

En se reportant plus particulièrement aux figures 1 à 3, et suivant un exemple de réalisation, on voit qu'un dispositif de fixation amovible d'un enjoliveur 1 sur une roue 2 comprend essentiellement une couronne élastiquement déformable et indépendante 3 clippée dans un redan annulaire 4 de la jante 5 de la roue 2, dont on a montré en 6 le voile.

Des attaches 7 clippées d'une part sur la couronne 3 et d'autre part sur la face interne 1a de l'enjoliveur 1, assurent la liaison entre ces deux éléments comme on le décrira en détail ultérieurement.

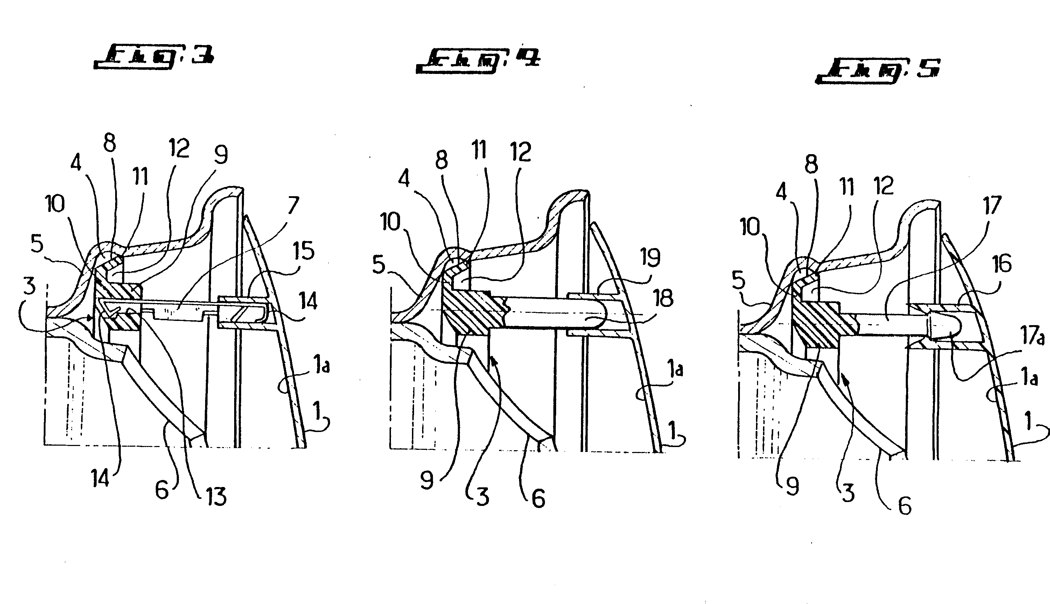

La couronne indépendante et élastique 3 est de préférence réalisée en matière synthétique et comporte, comme on le voit mieux sur les figures 2 à 5, une lèvre annulaire externe 8 qui est relativement mince et plus élastique que la partie restante ou âme 9 de la couronne 3 pour permettre le clippage de cette dernière dans le redan 4 de la jante 5.

La lèvre 8 est reliée à l'âme 9 par un voile de matière 10 qui fait face à la jante 5 de la roue lorsque la couronne 3 est en position montée, comme on le voit sur les figures 3 à 5. En outre, la lèvre 8 présente un bord libre ou extrémité 11, qui est écarté de l'âme 9 de façon à former avec cette âme une rainure annulaire 12 qui, comme on le voit bien sur les figures, présente en section transversale sensiblement la forme d'un V.

Le diamètre externe de la couronne 3, c'est-à-dire plus précisément le diamètre du cercle constitué par le bord d'extrémité 11 de la lèvre 8, est légèrement plus grand que le diamètre du redan annulaire 4, de manière que la couronne 3 puisse être retenue dans ledit redan par emmanchement à force et encastrement.

Comme on le voit sur les figures 2 et 3, des orifices 13 sont prévus dans l'âme 9 de la couronne 3, lesquels orifices peuvent être par exemple au nombre de 4, comme on le voit sur la figure 2. Ainsi, les attaches 7 qui, comme connu en soi, peuvent être réalisées en acier à ressort et comporter des griffes 14 à leurs extrémités, peuvent être clippées dans les orifices 13.

L'une des extrémités de l'attache 7 étant ainsi retenue dans un orifice 13, l'autre extrémité de l'attache peut être clippée dans un logement 15 prévu sur ou venant de moulage avec la face interne 1a de l'enjoliveur 1, comme cela est bien visible sur la figure 3.

Suivant un autre mode de réalisation visible sur la figure 5, l'enjoliveur 1 peut être clippé sur la couronne 3 directement, c'est-à-dire sans utiliser des attaches intermédiaires. A cet effet, l'âme de la couronne 3 comporte des doigts ou analogues 17 venant de matière avec l'âme 9 et dont l'extrémité libre 17a peut être clippée dans un logement approprié 16 solidaire de la face interne 1a de l'enjoliveur 1. une telle disposition complique un petit peu la fabrication de la couronne 3, mais présente l'avantage d'éviter la la prévision d'attaches de liaison entre l'enjoliveur 1 et la couronne 3.

L'âme 9 de la couronne comporte, comme on le voit bien sur les figures 2 et 4, plusieurs pions 18 de centrage de l'enjoliveur 1 par rapport à la couronne, lors du montage. Ces pions 18 coopèrent avec des logements 19 de forme correspondante, prévus sur la face interne 1a de l'enjoliveur 1. Les pions 18, comme on le comprend, empêchent la rotation de l'enjoliveur 1 par rapport à la couronne 3, car les trous 13 sont légèrement surdimensionnés. De tels pions de centrage peuvent être omis dans le cas de la réalisation illustrée sur la figure 5.

On a montré en 20 sur la figure 2 une encoche pratiquée dans la périphérie externe de la couronne 3, de façon à réaliser un passage pour la valve du pneumatique.

Le montage de l'enjoliveur 1 sur la roue 2 se déduit immédiatement de la description qui précède.

Tout d'abord, on emmanche à force la couronne 3 dans le redan annulaire 4 de la jante 5, de sorte que ladite couronne est maintenue par simple clippage dans le redan 4. Puis on clippe l'enjoliveur 1 sur la couronne 3 soit par l'intermédiaire d'attaches de liaison 7 (figures 1 à 3), soit directement sur les doigts 17 (figure 5), lesquels doigts peuvent être prévus par exemple à l'emplacement des orifices 13 visibles sur la figure 2.

Ainsi, grâce à la pièce intermédiaire et indépendante constituée par la couronne 3, il n'y a aucun risque que les attaches de liaison détériorent la peinture de la roue. En outre, aucune contrainte ne s'exerce sur l'enjoliveur qui, de ce fait, peut être très simplifié et est donc moins coûteux, tant sur le plan du moule pour le fabriquer que sur celui du prix du matériau utilisable pour fabriquer cet enjoliveur. Il faut encore dire ici que lors des déformations de la jante de roue lors du roulement du véhicule, la couronne peut épouser ces déformations car l'âme de cette couronne ne possède qu'une faible rigidité en torsion, de sorte que la bonne tenue de l'enjoliveur est assurée sans que celui-ci risque de se séparer de la roue. Enfin, la fixation selon la présente invention est universelle en ce sens que l'on peut utiliser la même couronne et les mêmes attaches pour différents styles de roue.

Bien entendu, l'invention n'est nullement limitée aux modes de réalisation décrits et illustrés qui n'ont été donnés qu'à titre d'exemple.

C'est ainsi que la couronne intermédiaire ou indépendante 3 pourrait comporter plusieurs lèvres périphériques externes.

L'invention comprend donc tous les équivalents techniques des moyens décrits ainsi que leurs combinaisons si celles-ci sont effectuées suivant son esprit.

## Revendications

1. Dispositif de fixation amovible d'un enjoliveur (1) sur une jante (5) de roue (2) par l'intermédiaire d'une couronne (3) indépendante et élastiquement déformable qui peut être ancrée sur la jante de roue, caractérisé en ce que ladite couronne comporte une âme (9) reliée par un voile de matière (10) à une lèvre annulaire externe (8) mince et plus élastique que l'âme (9) pour permettre le clippage de la couronne (3) par emmanchement à force et encastrement de la lèvre (8) dans un redan annulaire (4) de la jante de roue, ladite âme (9) formant avec la lèvre (8) une rainure annulaire ( 12) présentant sensiblement la forme d'un V, et étant reliée à l'enjoliveur (1) par des attaches (7) ou des doigts (17) solidaires de l'âme et clippés dans des logements (15, 16) prévus sur la face interne (1a) de l'enjoliveur (1).

2. Dispositif selon la revendication 1, caractérisé en ce que l'âme (9) de la couronne (3) comporte des pions de centrage (18) de l'enjoliveur (1) par rapport à la couronne, ces pions coopérant avec des logements (19) de forme correspondante sur la face interne (1a) de l'enjoliveur (1).

3. Assemblage formé par un enjoliveur et une roue de véhicule, caractérisé en ce qu'il est réalisé à l'aide du dispositif selon la revendication 1 ou 2.

## Claims

1. Device for the removable fastening of an ornamental cap (1) on a rim (5) of a wheel (2) through the medium of an independent and resiliently deformable ring (3) which may be anchored onto the wheel rim, characterized in that the said ring comprises a web (9) connected through a strip of material (10) to a thin annular lip (8) more resilient than the web (9) for allowing the clipping of the ring (3) through force-fitting and setting of the lip (8) into an annular step (4) of the wheel rim, the said web (9) forming with the lip (8) an annular groove (12) exhibiting substantially a V-shape, and being connected to the ornamental cap (1) by fastenings (7) or fingers (17) solid with the web and clipped into housings (15, 16) provided on the inner face (1a) of the ornamental cap (1).

2. Device according to claim 1, characterized in that the web (9) of the ring (3) comprises studs (18) for centering the ornamental cap (1) with respect to the ring, these studs co-operating with recesses (19) of corresponding shape on the inner face (1a) of the ornamental cap (1).

3. Assembly formed of an ornamental cap and a vehicle wheel, characterized in that it is carried out by means of the device according to claim 1 or 2.

## Patentansprüche

1. Vorrichtung zur lösbaren Befestigung einer Zierkappe (1) an einer Felge (5) eines Rades (2) über einen unabhängigen und elastisch verformbaren Kranz (3) der an der Radfelge verankerbar ist, dadurch gekennzeichnet, dass der besagte Kranz einen Steg (9) aufweist, der durch einen Werkstoffstreifen (10) mit einer dünnen ringförmigen Aussenleiste (8), die elastischer als der Steg (9) ist, verbunden ist, um das Einklemmen des Kranzes (3) durch gewaltsames Einstecken und Einspannen der Leiste (8) in einen ringförmigen Absatz (4) der Radfelge zu gestatten, wobei der besagte Steg (9) mit der Leiste (8) eine ringförmige im wesentlichen V-förmige Nut (12) bildet und mit der Zierkappe (1) durch mit dem Steg festverbundene und in auf der Innenseite (1a) der Zierkappe (1) vorgesehenen Ausparungen (15, 16) eingeklemmte Verbindungsstücke (7) oder Finger (17) verbunden ist.

2. Vorrichtung nach Anspruch 1, dadurch gekennzeichnet, dass der Steg (9) des Kranzes (3) Zapfen (18) zum Zentrieren der Zierkappe (1) gegenüber dem Kranz aufweist, wobei diese Zapfen mit Ausnehmungen (19) entsprechender Gestalt an der Innenseite (1a) der Zierkappe (1) zusammenwirken.

3. Durch eine Zierkappe und ein Fahrzeugrad gebildete Zusammenbau, dadurch gekennzeichnet, dass er mit Hilfe der Vorrichtung gemäss dem Anspruch 1 oder 2 durchgeführt wird.

Fig. 1

Fig. 3

Fig. 3

Fig. 4

Fig. 5

0 149 935